Europäisches Patentamt

European Patent Office

Office européen des brevets

(11) Publication number: **0 048 618**
**B1**

## (12) EUROPEAN PATENT SPECIFICATION

(45) Date of publication of patent specification: **11.12.85**

(21) Application number: **81304329.6**

(22) Date of filing: **21.09.81**

(51) Int. Cl.⁴: **C 08 L 9/06, B 60 C 1/00**

(54) Rubber composition for tires.

(30) Priority: **20.09.80 JP 130077/80**

(43) Date of publication of application:
**31.03.82 Bulletin 82/13**

(45) Publication of the grant of the patent:
**11.12.85 Bulletin 85/50**

(84) Designated Contracting States:
**BE DE FR GB NL SE**

(56) References cited:
**DE-A-1 957 366**
**FR-A-1 594 358**
**FR-A-2 405 147**

(73) Proprietor: **BRIDGESTONE TIRE COMPANY LIMITED**
**10-1, Kyobashi 1-Chome Chuo-Ku**
**Tokyo (JP)**

(72) Inventor: **Ogawa, Masaki**
**943-43, Irumagawa**
**Sayama City (JP)**
Inventor: **Ikegami, Mikihiko**
**16-11, Nakaarai 5-chome**
**Tokorozawa City (JP)**

(74) Representative: **Whalley, Kevin et al**
**Marks & Clerk 57/60 Lincoln's Inn Fields**
**London WC2A 3LS (GB)**

The file contains technical information
submitted after the application was filed and
not included in this specification

Courier Press, Leamington Spa, England.

# 0 048 618

**Description**

This invention relates to a rubber composition for tires, and more particularly to a rubber composition for forming the tread of a pneumatic tire.

Styrene-butadiene copolymer rubbers have been widely used in treads for tires owing to their good wet skid resistance on wet roads and good wear resistance. However, the energy loss from tires utilizing such rubbers is large and heat generation is apt to occur, so that these rubbers are unsuitable for application to large-size pneumatic tires.

On the other hand, the wet skid resistance is important in large-size pneumatic tires. Furthermore, in relatively small-size pneumatic tires previously using styrene-butadiene copolymer rubber, it is significant to reduce the energy loss or rolling resistance from the viewpoint of energy savings. Therefore, there is a need to develop novel rubbers which have good wet skid resistance and small energy loss which can be used in both large-size and small-size tires. For this purpose, there have been proposed so-called high vinyl polybutadiene rubbers or high vinyl styrene-butadiene copolymer rubbers, which contain 50—90% by weight of 1,2-bonds. However, when these rubbers are applied to the tread of a tire, while the wet skid resistance and rolling resistance are improved to some extent, on the other hand the wear resistance and fracture resistance are considerably degraded in the case of the high vinyl polybutadiene rubber and are moderately degraded in case of the high vinyl styrene-butadiene copolymer rubber. Therefore, when such a tire is used under even slightly severe conditions, wear rapidly occurs.

In order to overcome the above-mentioned drawbacks, the present inventors have previously investigated a content of 1,2-bonds of 25—45% by weight and the interaction between the micro structures in styrene-butadiene copolymer rubber, as described in the specification of US—A—4 387 756. That is, it has hitherto been considered that since the improvement of wet skid resistance is contrary to the reduction of rolling resistance, it is relatively difficult to simultaneously satisfy both such requirements. This is due to the fact that there are observed only factors having the most influence on each requirement. However, many primary properties (e.g. content of cis-1,4 bonds, content of bound styrene) are naturally concerned with one requirement, so that the use of styrene-butadiene copolymer rubbers based on an overall consideration of these primary properties as a tread for tires has been proposed in the aforementioned patent application. However, such copolymer rubbers make it possible to simultaneously improve the wet skid resistance, rolling resistance and wear resistance, but an advantage inherent to the conventional styrene-butadiene copolymer of good uneven-wear resistance is lost. As a result, it is ascertained that when a tire using the above copolymer rubber is run over a long period of time, uneven wearing gradually occurs.

Thus there have not yet been realized pneumatic tires which have the desirable wet, skid resistance, rolling resistance, fracture resistance, wear resistance and uneven-wear resistance and good workability.

With the foregoing in mind, the inventors have made various further studies with respect to the aforementioned primary properties in order to simultaneously improve the wet skid resistance, rolling resistance, fracture resistance, wear resistance and uneven-wear resistance of tires using styrene-butadiene copolymer rubber and have found that pneumatic tires satisfying all of the above requirements can be obtained when the tread of the tire is constituted with a rubber composition containing a particularly defined styrene-butadiene copolymer rubber.

That is, according to the present invention, there is provided a rubber composition for a pneumatic tire tread, comprising 10 to 120 parts by weight of carbon black and 0.5 to 5 parts by weight of a vulcanizer based on 100 parts by weight of a styrene-butadiene copolymer rubber alone or a blend rubber of not less than 30 parts by weight of the styrene-butadiene copolymer rubber and not more than 70 parts by weight of other diene rubber, the styrene-butadiene copolymer rubber being obtained by random copolymerization of styrene with 1,3-butadiene and satisfying the following requirements:

(1) the content of bound styrene is 10 to 30% by weight;
(2) the content of 1,2-bonds in the butadiene is 42 to 70% by weight;
(3) the content of trans-1,4 bonds in the butadiene is not less than 25% by weight;
(4) the value obtained by subtracting the content of cis-1,4 bonds in the butadiene from the said content of trans-1,4 bonds is not less than 8% by weight;
(5) the relation between the said content of bound styrene and the said content of 1,2-bonds is $65 \leqq 1.7 \times$ the content of bound styrene (% by weight)+the content of 1,2-bonds (% by weight)$\leqq 100$;
(6) the weight mean molecular weight $(\overline{M}_w)$ is $35 \times 10^4$ to $65 \times 10^4$;
(7) the ratio of the weight mean molecular weight $(\overline{M}_w)$ to the number mean molecular weight $(\overline{M}_n)$ is not more than 2.3;
(8) the number of peaks in a molecular weight distribution curve is not less than 2; and
(9) the relation between hhe said weight means molecular weight and the said content of trans-1,4 bonds is $75 \leqq \overline{M}_w \times 10^{-4} + 1.3 \times$ the content of trans-1,4 bonds (% by weight)$\leqq 120$.

As apparent from the specification of the aforementioned US—A—4 387 756, it is necessary that the ratio $(\overline{M}_w/\overline{M}_n)$ of weight mean molecular weight to number mean molecular weight as to the molecular weight distribution is not more than 2.3 in order to simultaneously improve the wet skid resistance and

2

rolling resistance and provide a satisfactory wet resistance. In this connection, in the styrene-butadiene copolymer rubber to be used according to the present invention, the ratio $\overline{M}_w/\overline{M}_n$ should also be not more than 2.3, preferably not more than 2.1. However, when the molecular weight distribution is made sharp as described above, the copolymer rubber tends to cause uneven wear.

Therefore, in order to avoid uneven wear, it is necessary to increase the content of 1,2-bonds in the butadiene portion of the copolymer rubber. In this case, the larger the content of 1,2-bonds, the better are both the wet skid resistance and rolling resistance. However, when the content of 1,2-bonds is too large, the interaction with carbon black becomes small, so that the strength at rupture and wear resistance of the copolymer rubber are apt to be considerably lower. Therefore, in the copolymer rubber to be used in the present invention, it is necessary that the content of 1,2-bonds is 42 to 70% by weight, preferably 45 to 60% by weight.

As mentioned above, it is necessary to increase the content of 1,2-bonds in the copolymer rubber, which means that the content of bound styrene may be reduced in order to simultaneously improve the wet skid resistance and rolling resistance, for the following reasons. The bound styrene is closely related to the strength at rupture and density of the copolymer rubber. That is, when the content of bound styrene is up to about 35% by weight, if styrene is randomly distributed, the strength at rupture of the copolymer rubber becomes higher in proportion to the content of bound styrene. On the other hand, the larger the content of bound styrene, the larger the energy loss of the copolymer rubber, so that the content of bound styrene is to be preferably made as small as possible and is 30% by weight at most. However, considering the synergistic effect with trans-1,4 bonds as mentioned below, the content of bound styrene must be at least 10% by weight. Therefore, in the copolymer rubber to be used in the invention, the content of bound styrene is 10 to 30% by weight, preferably 15 to 25% by weight. Moreover, the term "random distribution" as used herein means that the block content of bound styrene is not more than 10% by weight when measured by an oxidative destruction process as described by I. M. Kolthoff *et al* in J. Polymer Sci., *1*, 429 (1946).

In the copolymer rubber to be used in the invention, the content of 1,2-bonds is made relatively large and the content of bound styrene is made relatively small in order to simultaneously improve the wet skid resistance and rolling resistance and further improve the uneven-wear resistance as previously mentioned. As a result, the strength at rupture and wear resistance are apt to be lower. Therefore, in order to overcome this drawback, the weight mean molecular weight ($\overline{M}_w$) should be made larger, and it is necessary that the copolymer rubber to be used in the invention has a value of $\overline{M}_w$ of not less than $35 \times 10^4$. However, when the $\overline{M}_w$ value becomes larger than about $55 \times 10^4$, the workability such as kneading is rapidly degraded, while when the $\overline{M}_w$ value exceeds $65 \times 10^4$, the workability degrades to such an extent that the copolymer rubber cannot be applied to practical use. Thus, in the copolymer rubber to be used in the invention, $\overline{M}_w$ is $35 \times 10^4$ to $65 \times 10^4$, preferably $45 \times 10^4$ to $55 \times 10^4$.

Since the strength at rupture and wear resistance of the copolymer rubber to be used in the invention are improved by increasing the molecular weight as mentioned above, the workability is somewhat degraded. However, it is necessary to improve the workability in view of the productivity. In order to improve the workability, it is usually sufficient to make the molecular weight distribution broad, which is entirely contradictory to improving the wear resistance by making the molecular weight distribution sharp as previously mentioned. Therefore, in order to simultaneously improve the workability and wear resistance, the molecular weight distribution curve should include not less than 2 peaks in the copolymer rubber to be used in the invention. In order to obtain a copolymer rubber satisfying such a requirement, wherein copolymer rubbers having a very sharp molecular weight distribution and different values of $\overline{M}_w$ are blended with each other to make the ratio $\overline{M}_w/\overline{M}_n$ not less than 2.3 as a whole, there may be used the methods disclosed in Japanese Patent Application Publication Nos. 14,172/67 and No. 4,996/69.

Furthermore, the relation between the content of bound styrene and the content of 1,2-bonds considerably affects the wet skid resistance and rolling resistance. In particular, the content of bound styrene has the greater effect and can be considered independently because it is represented as % by weight of the copolymer rubber, but the change in the content of bound styrene changes the content of butadiene. Since the content of 1,2-bonds is represented as % by weight of the butadiene portion, the content of 1,2-bonds is apparently influenced by the content of bound styrene. Therefore, the requirement satisfying both the wet skid resistance and rolling resistance is represented by the content of bound styrene and the content of 1,2-bonds as a function of the content of bound styrene. As a result of investigations, it has been found that in a copolymer rubber wherein the content of bound styrene is 10 to 35% by weight, the content of 1,2-bonds in the butadiene portion is 25 to 80% by weight, the content of trans-1,4 bonds is not less than 20% by weight and the ratio $\overline{M}_w/\overline{M}_n$ is not more than 2.5, the above requirement can be approximated by the following equation:·

$$65 \leqq 1.7 \times \text{content of bound styrene (\% by weight)} + \text{content of 1,2-bonds (\% by weight)} \leqq 100$$

That is, when the contents of bound styrene and 1,2-bonds are within the above defined range, the wet skid resistance and rolling resistance can simultaneously be satisfied. When the above value is less than 65, the wet skid resistance deteriorates and is not improved even when changing other factors such as the content

# 0 048 618

of trans-1,4 bonds. On the other hand, when the above value exceeds 100, even if other factors are changed, the rolling resistance cannot be improved.

In the butadiene portion, the trans-1,4 bonds largely contribute to the wear resistance of the co-polymer rubber. That is, the larger the content of trans-1,4 bonds, the greater the improvement in the wear resistance. Such a phenomenon is peculiar to styrene-butadiene copolymer rubber wherein the content of 1,2-bonds is relatively large and the content of bound styrene is not less than 10% by weight. Conversely, the wear resistance is degraded when the content of bound styrene is less than 10% by weight or in case of butadiene homopolymers containing no styrene. In the copolymer rubber to be used in the invention, the content of trans-1,4 bonds must be at least 25% by weight. Furthermore, the above phenomenon is produced by the balance with the cis-1,4 bonds, so that when the content of cis-1,4 bonds is too large, it is not favourable in order to sufficiently develop the effect of improving the wear resistance by the trans-1,4 bonds. Thus, in the copolymer rubber to be used in the invention, it is necessary that a value obtained by subtracting the content of cis-1,4 bonds from the content of trans-1,4 bonds is not less than 8% by weight, preferably not less than 10% by weight.

Since the content of trans-1,4 bonds is largely related to the wear resistance as mentioned above, when the content of trans-1,4 bonds becomes larger, other primary properties such as the content of 1,2-bonds are restricted, and as a result the improvement of the wet skid resistance and rolling resistance is also restricted. However, the content of trans-1,4 bonds is interchangeable with the $\overline{M}_w$ value in relation to the wear resistance, so that it has been confirmed that even when the content of trans-1,4 bonds is as small as possible, if $\overline{M}_w$ is made large, the wear resistance can be improved satisfactorily. In this connection, when the content of trans-1,4 bonds is very small compared with $\overline{M}_w$, the trans-1,4 bond content makes a larger contribution to wear resistance. As a result, in a styrene-butadiene copolymer wherein the ratio $\overline{M}_w/\overline{M}_n$ is not more than 2.3, in order to improve the wear resistance, it has been found that the relation between the content of trans-1,4 bonds and the $\overline{M}_w$ value can be approximated by the following equation:

$$75 \leqq \overline{M}_w \times 10^{-4} + 1.3 \times \text{content of trans-1,4 bonds (\% by weight)} \leqq 120$$

That is, when the above relation is within the above defined range, the wear resistance is satisfactory. When the above value is less than 75, the wear resistance is insufficient, while when the above value exceeds 120, the workability deteriorates or the content of trans-1,4 bonds becomes excessive and hence the content of 1,2-bonds is reduced.

According to the invention, styrene-butadiene copolymer rubber as described above may be used alone in the composition forming the tread of a tire or, if necessary, may be blended with not more than 70 parts by weight, preferably not more than 50 parts by weight, based on 100 parts by weight of total rubber content, of other diene rubber such as natural rubber, poly-butadiene rubber, synthetic polyisoprene rubber, butadiene-acrylonitrile copolymer rubber, or styrene-butadiene copolymer rubber other than the above defined copolymer rubber.

Moreover, the above defined styrene-butadiene copolymer rubber may for example be prepared as follows: that is, 25 kg of cyclohexane, 1.3 kg of styrene, 4.5 kg of 1,3-butadiene, 2.54 g of n-butyl lithium, 0.5 g of sodium dodecylbenzene sulfonate and 1.7 g of ethylene glycol dimethyl ether are charged into a reaction vessel of 50 l capacity and polymerized therein at a polymerization temperature of 52.5°C under a nitrogen atmosphere for 1.3 hours, after which there is added 4 g of stannic chloride, and thereafter the resulting mixture is maintained at a temperature of 45°C for 18 hours. Then, after 100 g of 2,6-di-t-butyl-p-cresol is added, the solvent is removed by stripping with steam and the resulting product is dried on a roll heated at 115°C. In this case, the content of 1,2-bonds can be controlled by changing the polymerization temperature, while the content of trans-1,4 bonds and the content of cis-1,4 bonds can be controlled by changing the addition amounts of sodium dodecylbenzene sulfonate, ethylene glycol dimethyl ether and n-butyl lithium.

In the rubber composition according to the invention to be used in the tread of a pneumatic tire, there are contained 10 to 120 parts by weight of carbon black and 0.5 to 5 parts by weight of a vulcanizer based on 100 parts by weight of the rubber. When the content of carbon black is less than 10 parts by weight, the reinforcing effect is less, while when the content of carbon black exceeds 120 parts by weight, the workability such as kneading is adversely effected. On the other hand, when the content of the vulcanizer is less than 0.5 part by weight, the vulcanizing effect cannot be expected to develop sufficiently, while when the content of vulcanizer exceeds 5 parts by weight, the hardness is too high and the resulting vulcanized rubber is unsuitable for use in the tread.

The carbon black used preferably has an iodine adsorption value of not less than 36 mg/l and a dibutyl phthalate adsorption value of not less than 60 ml/100 g in order to further improve the wear resistance and reinforcing effect.

The vulcanizer is preferably at least one substance selected from sulfur, p-quinone dioxime, p,p'-dibenzoylquinone dioxime, 4,4'-dithiodimorpholine, poly-p-dinitrosobenzene, ammonium benzoate and alkylphenol disulfide. It is preferable to use one or more of sulfur, 4,4'-dithiodimorpholine and alkylphenol disulfide, and the use of sulfur is most preferable.

The rubber composition according to the invention may further contain an inorganic filler such as silica, bentonite, clay, titanium oxide, talc, china clay, diatomaceous earth, or chalk; a vulcanization

4

accelerator such as N-oxydiethylene-2-benzothiazole sulfeneamide, di-2-benzothiazyl disulfide, or N-cyclohexyl-2-benzothiezole sulfeneamide; an accelerator activator such as zinc white or stearic acid; a softener such as aromatic oil; and an antioxidant such as N-phenyl-N'-isopropyl-p-phenylenediamine, phenyl-β-naphthylamine, or 2-mercaptobenzimidazole; each of which is added in a conventional amount, in addition to the above-mentioned carbon black and vulcanizer.

A pneumatic tire incorporating the rubber composition according to the invention may be reinforced with organic fibre cords of nylon, vinylon, polyester, or KEVLAR (trade name), or with inorganic fibre cords of steel, glass, or carbon. Furthermore, the carcass of the tire may be of radial structure or bias structure, but is preferably of radial structure.

According to the invention, pneumatic tires having a tread formed of the above-mentioned rubber composition may have simultaneously considerably improved wet skid resistance, rolling resistance, fracture resistance, wear resistance, uneven-wear resistance and workability.

The invention will be further described with reference to the following illustrative Examples.

Example 1

There were first provided 34 kinds of styrene-butadiene copolymer rubbers as shown in the following Table 1. Then, 34 kinds of rubber compositions were prepared by adding 50 parts by weight of ISAF carbon black, 10 parts by weight of aromatic oil, 2 parts by weight of stearic acid, 1 part by weight of N-phenyl-N'-isopropyl-p-phenylenediamine, 4 parts by weight of zinc white, 0.6 part by weight of N-oxydiethylene-2-benzothiazole sulfeneamide, 0.8 part by weight of di-2-benzothiazyl disulfide and 1.5 parts by weight of sulfur to 100 parts of each of these styrene-butadiene copolymer rubbers. In each of these rubber compositions, the presence of roll baggy was evaluated as a workability at the kneading with a 10 inch (25,4 cm) roller and the strength at rupture (Tb) was evaluated according to a method of JIS K-6301. Thereafter, pneumatic tires having a tire size of 165 SR 13 were manufactured by using the above-mentioned rubber composition in their tread and the wet skid resistance, rolling resistance, wear resistance and uneven-wear resistance thereof were evaluated to obtain results as shown in Table 1.

Moreover, the performance evaluation and the microstructure of the styrene-butadiene copolymer rubbers were measured as follows.

Wet skid resistance

A vehicle provided with a test tire was run on a wet concrete road having a water level of 3 mm at a speed of 80 km/hr and then subjected to rapid braking at the above speed. Then, the running distance required for completely stopping the vehicle was measured. When a tire using the styrene-butadiene copolymer rubber of Sample No. 34 of Table 1 is a control tire, the wet skid resistance of the test tire was evaluated by the following equation:

$$\frac{(\text{Running distance of control tire}) - (\text{Running distance of test tire})}{(\text{Running distance of control tire})} \times 100$$

Rolling resistance

The test tire subjected to an internal pressure of 1.7 kg/cm² was trained on a steel drum having a diameter of 1,707.6 mm and a width of 350 mm, which was rotated by driving a motor at a speed of 80 km/hr under a JIS 100% load (385 kg) for 30 minutes, and thereafter the rotating speed of the drum was raised to 100 km/hr. Then, the driving of the motor was stopped to run the drum by inertia, during which the rolling resistance of the tire to the drum at a speed of 50 km/hr was measured on a basis of deceleration speed of drum and time change. Next, a net rolling resistance of the tire was determined by subtracting the previously calculated drum resistance from the measured value. Moreover, the rolling resistance of the test tire was evaluated by the following equation in a similar manner to the evaluation of the wet skid resistance:

$$\frac{(\text{Rolling resistance of control tire}) - (\text{Rolling resistance of test tire})}{(\text{Rolling resistance of control tire})} \times 100$$

Wear resistance

After the test tire was run over a distance of 10,000 km, the depth of the remaining tread was measured, from which a running distance required for wearing the tread only by 1 mm was calculated and defined as a wear resistance by an index on the basis that the control tire is 100. The larger the index value, the better the wear resistance.

Uneven-wear resistance

After the test tire was run over a distance of 20,000 km, the appearance of the tire was observed to determine the presence of uneven wear.

5

Microstructure

The content of bound styrene was measured by means of a spectrophotometer using an absorbance of 699 cm$^{-1}$, and the microstructures in the butadiene portion were measured by D. Morero's method [Chem. & Ind., *41*, 758 (1959)]. Further, the ratio $\overline{M}_w/\overline{M}_n$ was measured in a solution of 0.5 g/100 ml of tetrahydrofuran by means of a measuring apparatus. Waters GPC 200.

TABLE 1(a)

| Sample No. | | 1 | 2 | 3 | 4 | 5 | 6 | 7 |
|---|---|---|---|---|---|---|---|---|
| Microstructure | | Example | Example | Example | Example | Example | Example | Example |
| Content of bound styrene | (wt.%) | 20.7 | 20.2 | 20.5 | 11.0 | 28.5 | 25.0 | 15.0 |
| Content of trans-1,4 bonds | (wt.%) | 34 | 28 | 27 | 26 | 35 | 36 | 25 |
| Content of cis-1,4 bonds | (wt.%) | 21 | 17 | 19 | 11 | 20 | 21 | 7 |
| Content of trans-1,4 bonds−Content of cis-1,4 bonds | (wt.%) | 13 | 11 | 8 | 15 | 15 | 15 | 18 |
| Content of 1,2-bonds | (wt.%) | 45 | 55 | 54 | 63 | 45 | 43 | 68 |
| $\overline{M}_w \times 10^4$ | | 43.2 | 49.7 | 45.0 | 47.3 | 41.3 | 48.8 | 48.5 |
| $\overline{M}_w/\overline{M}_n$ | | 1.6 | 1.8 | 2.2 | 1.9 | 1.8 | 1.6 | 1.7 |
| 1.7×Content of bound styrene (wt.%)+Content of 1,2-bonds (wt.%) | | 80.2 | 89.3 | 88.9 | 81.7 | 93.5 | 85.5 | 93.5 |
| $\overline{M}_w \times 10^{-4}$+1.3×Content of trans-1,4 bonds (wt.%) | | 87.4 | 86.1 | 80.0 | 81.1 | 86.5 | 95.6 | 81.0 |
| Number of peaks | | 2 | 2 | 2 | 2 | 2 | 2 | 2 |
| Results | | | | | | | | |
| Workability | | none | none | none | none | none | none | none |
| Strength at rupture | (kg/cm²) | 235 | 227 | 225 | 200 | 234 | 213 | 246 |
| Wet skid resistance | (%) | +12 | +16 | +11 | +1 | +21 | +8 | +10 |
| Rolling resistance | (%) | +16 | +14 | +13 | +17 | +2 | +2 | +8 |
| Wear resistance | (index) | 105 | 102 | 100 | 100 | 104 | 102 | 100 |
| Uneven-wear resistance | | none | none | none | none | none | none | none |

0 048 618

TABLE 1(b)

| Sample No. | | 8 | 9 | 10 | 11 | 12 | 13 | 14 |
|---|---|---|---|---|---|---|---|---|
| Microstructure | | Example | Example | Example | Example | Example | Example | Example |
| Content of bound styrene | (wt.%) | 20.5 | 20.3 | 14.5 | 25.0 | 22.6 | 19.8 | 20.0 |
| Content of trans-1,4 bonds | (wt.%) | 35 | 32 | 33 | 29 | 32 | 48.5 | 32 |
| Content of cis-1,4 bonds | (wt.%) | 16 | 18 | 24 | 15.5 | 21 | 8.5 | 20 |
| Content of trans-1,4 bonds—Content of cis-1,4 bonds | (wt.%) | 19 | 14 | 9 | 13.5 | 11 | 40 | 12 |
| Content of 1,2-bonds | (wt.%) | 49 | 50 | 43 | 55.5 | 47 | 43 | 48 |
| $\overline{M}_w \times 10^4$ | | 36.0 | 62.0 | 45.0 | 46.0 | 35.0 | 55.0 | 45.0 |
| $\overline{M}_w/\overline{M}_n$ | | 1.7 | 1.9 | 1.7 | 1.7 | 1.8 | 1.9 | 2.3 |
| $1.7 \times$ Content of bound styrene (wt.%)+Content of 1,2-bonds (wt.%) | | 83.9 | 84.5 | 67.7 | 98.0 | 85.4 | 76.7 | 82.0 |
| $\overline{M}_w \times 10^{-4}+1.3 \times$ Content of trans-1,4 bonds (wt.%) | | 81.5 | 97.6 | 103.5 | 83.7 | 76.0 | 118 | 86.6 |
| Number of peaks | | 2 | 2 | 2 | 2 | 2 | 2 | 2 |
| Results | | | | | | | | |
| Workability | | none | slightly presence | none | none | none | none | none |
| Strength at rupture | (kg/cm$^2$) | 205 | 235 | 203 | 223 | 208 | 228 | 208 |
| Wet skid resistance | (%) | +14 | +14 | +1 | +22 | +13 | +5 | +5 |
| Rolling resistance | (%) | +14 | +16 | +7 | +1 | +12 | +16 | +2 |
| Wear resistance | (index) | 102 | 125 | 101 | 108 | 103 | 129 | 109 |
| Uneven-wear resistance | | none | none | none | none | none | none | none |

TABLE 1(c)

| Sample No. | | 15 | 16 | 17 | 18 | 19 | 20 | 21 |
|---|---|---|---|---|---|---|---|---|
| Microstructure | | Example | Example | Comparative Example | Comparative Example | Comparative Example | Comparative Example | Comparative Example |
| Content of bound styrene | (wt.%) | 20.7 | 21.2 | 20.6 | 20.1 | 20.3 | 9.5 | 32.0 |
| Content of trans-1,4 bonds | (wt.%) | 33 | 31 | 27 | 24 | 29 | 26 | 34 |
| Content of cis-1,4 bonds | (wt.%) | 18 | 22 | 17 | 16 | 23 | 11 | 23 |
| Content of trans-1,4 bonds–Content of cis-1,4 bonds | (wt.%) | 15 | 9 | 10 | 8 | 6 | 9 | 11 |
| Content of 1,2-bonds | (wt.%) | 49 | 47 | 56 | 60 | 48 | 63 | 43 |
| $\overline{M}_w \times 10^4$ | | 43.5 | 44.0 | 47.0 | 48.2 | 47.7 | 46.2 | 46.7 |
| $\overline{M}_w/\overline{M}_n$ | | 1.7 | 2.1 | 1.3 | 1.8 | 1.7 | 2.0 | 2.0 |
| $1.7 \times$ Content of bound styrene (wt.%)+Content of 1,2-bonds (wt.%) | | 84.2 | 83.0 | 91.0 | 94.2 | 82.5 | 79.2 | 97.2 |
| $\overline{M}_w \times 10^{-4}+1.3 \times$ Content of trans-1,4 bonds (wt.%) | | 86.4 | 84.3 | 82.1 | 79.4 | 85.4 | 80.0 | 90.2 |
| Number of peaks | | 2 | 3 | 1 | 2 | 2 | 2 | 2 |
| Results | | | | | | | | |
| Workability | | none | none | presence | none | none | none | none |
| Strength at rupture | (kg/cm²) | 224 | 236 | 198 | 206 | 218 | 184 | 233 |
| Wet skid resistance | (%) | +12 | +13 | +10 | +12 | +8 | −7 | +23 |
| Rolling resistance | (%) | +16 | +16 | +9 | +6 | +13 | +18 | −8 |
| Wear resistance | (index) | 105 | 108 | 97 | 90 | 93 | 93 | 95 |
| Uneven-wear resistance | | none | none | none | none | none | none | none |

TABLE 1(d)

| Sample No. | | 22 | 23 | 24 | 25 | 26 | 27 | 28 |
|---|---|---|---|---|---|---|---|---|
| Microstructure | | Comparative Example | Comparative Example | Comparative Example | Comparative Example | Comparative Example | Comparative Example | Comparative Example |
| Content of bound styrene | (wt.%) | 25.0 | 13.0 | 20.2 | 20.3 | 12.3 | 28.4 | 21.5 |
| Content of trans-1,4 bonds | (wt.%) | 36 | 18 | 33 | 31 | 35 | 28 | 28.5 |
| Content of cis-1,4 bonds | (wt.%) | 24 | 10 | 17 | 17 | 22 | 18 | 18.5 |
| Content of trans-1,4 bonds−Content of cis-1,4 bonds | (wt.%) | 12 | 8 | 16 | 14 | 13 | 10 | 10 |
| Content of 1,2-bonds | (wt.%) | 40 | 72 | 50 | 52 | 43 | 54 | 53 |
| $\overline{M}_w \times 10^4$ | | 45.2 | 39.0 | 34.0 | 66.5 | 47.1 | 47.3 | 28.1 |
| $\overline{M}_w/\overline{M}_n$ | | 1.7 | 1.6 | 1.8 | 2.1 | 1.8 | 1.7 | 2.1 |
| 1.7×Content of bound styrene (wt.%)+Content of 1,2-bonds (wt.%) | | 82.5 | 94.1 | 84.3 | 86.5 | 63.9 | 102.3 | 89.6 |
| $\overline{M}_w \times 10^{-4}$+1.3×Content of trans-1,4 bonds (wt.%) | | 92.0 | 62.4 | 76.9 | 106.8 | 106.9 | 83.7 | 65.1 |
| Number of peaks | | 2 | 2 | 2 | 2 | 2 | 2 | 2 |
| Results | | | | | | | | |
| Workability | | none | none | none | presence | none | none | none |
| Strength at rupture | (kg/cm$^2$) | 216 | 163 | 197 | 192 | 191 | 225 | 185 |
| Wet skid resistance | (%) | +7 | +6 | +13 | +2 | −4 | +24 | +16 |
| Rolling resistance | (%) | +3 | +4 | +14 | +13 | +7 | −6 | +10 |
| Wear resistance | (index) | 102 | 73 | 95 | 105 | 100 | 107 | 83 |
| Uneven-wear resistance | | presence | none | none | none | none | none | none |

TABLE 1(e)

| Sample No. | | 29 | 30 | 31 | 32 | 33 | 34* |
|---|---|---|---|---|---|---|---|
| Microstructure | | Comparative Example | Comparative Example | Comparative Example | Comparative Example | Comparative Example | Control |
| Content of bound styrene | (wt.%) | 20.8 | 21.5 | 20.5 | 20.3 | 20.2 | 23.5 |
| Content of trans-1,4 bonds | (wt.%) | 30 | 50 | 31 | 30 | 30 | 66 |
| Content of cis-1,4 bonds | (wt.%) | 22 | 10 | 22 | 22 | 18 | 15 |
| Content of trans-1,4 bonds−Content of cis-1,4 bonds | (wt.%) | 8 | 40 | 9 | 8 | 12 | 51 |
| Content of 1,2 bonds | (wt.%) | 48 | 40 | 47 | 48 | 52 | 19 |
| $\overline{M}_w \times 10^4$ | | 35.2 | 56.5 | 43.2 | 47.1 | 45.3 | 34.8 |
| $\overline{M}_w / \overline{M}_n$ | | 1.9 | 1.9 | 2.5 | 3.0 | 1.8 | 3.5 |
| 1.7×Content of bound styrene (wt.%)+Content of 1,2-bonds (wt.%) | | 83.4 | 76.5 | 81.9 | 82.5 | 86.3 | 59.0 |
| $\overline{M}_w \times 10^{-4}+1.3\times$Content of trans-1,4 bonds (wt.%) | | 74.2 | 121.5 | 83.5 | 86.1 | 84.3 | 120.6 |
| Number of peaks | | 2 | 2 | 2 | 2 | 1 | 1 |
| Results | | | | | | | |
| Workability | | none | none | none | none | presence | none |
| Strength at rupture | (kg/cm²) | 199 | 187 | 215 | 224 | 191 | 230 |
| Wet skid resistance | (%) | +14 | −8 | +6 | +7 | +10 | ±0 |
| Rolling resistance | (%) | +10 | +13 | −3 | −8 | +9 | ±0 |
| Wear resistance | (index) | 93 | 132 | 95 | 92 | 93 | 100 |
| Uneven-wear resistance | | none | none | none | none | none | none |

*SBR 1500

# 0 048 618

As apparent from Table 1, the pneumatic tires according to the Sample Nos. 1 to 16 using in the tread the rubber composition according to the invention have, overall, improved wet skid resistance, rolling resistance, fracture resistance, wear resistance and uneven-wear resistance, as compared with the comparative Sample Nos. 17 to 33 and the control.

Example 2

A rubber composition having a compounding recipe as shown in the following Table 2 was prepared, which was used in a tread of a pneumatic tire. The performances of the resulting tire were evaluated in the same manner as described in Example 1 to obtain results as shown in Table 2.

TABLE 2

| | Comparative Example | Comparative Example | Example | Example | Example |
|---|---|---|---|---|---|
| Styrene-butadiene copolymer rubber SBR1500 | | | | | 15 |
| Polybutadiene rubber BR01 | | | | | 15 |
| Natural rubber | 80 | 75 | 70 | 50 | 40 |
| Copolymer rubber (Sample No. 1) | 20 | 25 | 30 | 50 | 30 |
| HAF carbon black | 50 | 50 | 50 | 50 | 50 |
| Aromatic oil | 10 | 10 | 10 | 10 | 10 |
| N-phenyl-N'-isopropyl-p-phenylenediamine | 1 | 1 | 1 | 1 | 1 |
| Stearic acid | 2 | 2 | 2 | 2 | 2 |
| Zinc white | 4 | 4 | 4 | 4 | 4 |
| N-oxydiethylene-2-benzothiazole sulfeneamide | 0.6 | 0.7 | 0.7 | 0.8 | 0.7 |
| di-2-benzothiazyl disulfide | 0.2 | 0.2 | 0.2 | 0.2 | 0.2 |
| p-aminophenol disulfide | 2.0 | 2.0 | 2.0 | 0.2 | 0.2 |
| Results | | | | | |
| Strength at rupture (Tb) (kg/cm$^2$) | 254 | 246 | 225 | 219 | 220 |
| Wet skid resistance (%) | −4 | −2 | +2 | +4 | +2 |
| Rolling resistance (%) | +12 | +10 | +9 | +12 | +1 |
| Wear resistance (index) | 98 | 99 | 101 | 109 | 102 |
| Uneven-wear resistance | none | none | none | none | none |

From Table 2, it can be seen that results similar to those obtained in Example 1 can be achieved even when using the particular defined styrene-butadiene copolymer rubber in an amount of at least 30 parts by weight per 100 parts by weight of total rubber content.

## Claims

1. A rubber composition for a pneumatic tire tread, comprising 10 to 120 parts by weight of carbon black and 0.5 to 5 parts by weight of a vulcanizer (each based on 100 parts by weight of a styrene-butadiene copolymer rubber alone or a blend rubber of not less than 30 parts by weight of the said styrene-butadiene copolymer rubber and not more than 70 parts by weight of other diene rubber, the said styrene-butadiene copolymer rubber being obtained by random copolymerization of styrene with 1,3-butadiene and satisfying the following requirements:

(1) the content of bound styrene is 10 to 30% by weight;
(2) the content of 1,2-bonds in the butadiene is 42 to 70% by weight;
(3) the content of trans-1,4 bonds in the butadiene is not less than 25% by weight;
(4) the value obtained by subtracting the content of cis-1,4 bonds in the butadiene from the said content of trans-1,4 bonds is not less than 8% by weight;

and being characterized by satisfying the following further requirements:

(5) the relation between the said content of bound styrene and the said content of 1,2-bonds is $65 \leqq 1.7 \times$ the content of bound styrene (% by weight)+the content of 1,2-bonds (% by weight)$\leqq 100$;
(6) the weight mean molecular weight $(\overline{M}_w)$ is $35 \times 10^4$ to $65 \times 10^4$;
(7) the ratio of the weight mean molecular weight $(\overline{M}_w)$ to the number mean molecular weight $(\overline{M}_n)$ is not more than 2.3;
(8) the number of peaks in a molecular weight distribution curve is not less than 2; and
(9) the relation between the said weight mean molecular weight and the said content of trans-1,4 bonds is $75 \leqq \overline{M}_w \times 10^{-4}+1.3 \times$ the content of trans-1,4 bonds (% by weight)$\leqq 120$.

2. A rubber composition as claimed in Claim 1, characterized in that the carbon black has an iodine adsorption value of not less than 36 mg/l and a dibutyl phthalate adsorption value of not less than 60 ml/100 g.

3. A rubber composition as claimed in Claim 1 or 2, characterized in that the vulcanizer is at least one substance selected from sulfur, p-quinone dioxime, p,p'-dibenozylquinone dioxime, 4,4'-dithiodimorpholine, poly-p-dinitrosobenzene, ammonium benzoate and alkylphenol disulfide.

**Patentansprüche**

1. Kautschukmischung für die Lauffläche eines Luftreifens, umfassend 10 bis 120 Gew.-Teile Ruß und 0,5 bis 5 Gew.- Teile eines Vulkanisators, jeweils bezogen auf 100 Gew.- Teile eines Styrol-Butadien Kautschuks alleine oder einer Kautschukmischung aus nicht weniger als 30 Gew.-Teilen des Styrol-Butadien Copolymerkautschuks und nicht mehr als 70 Gew.-Teilen eines anderen Dienkautschuks, wobei der Styrol-Butadien Kautschuk durch statistische Copolymerisation von Styrol mit 1,3-Butadien erhalten worden ist und folgenden Bedingungen genügt:

(1) der Gehalt an gebundenem Styrol beträgt 10 bis 30 Gew.-%;
(2) der Gehalt an 1,2-Bindungen im Butadien beträgt 42 bis 70 Gew.-%;
(3) der Gehalt an trans-1,4 Bindungen im Butadien beträgt nicht weniger als 25 Gew.-%;
(4) der durch Subtraktion des Gehaltes an cis-1,4 Bindungen im Butadien von besagtem Gehalt an trans-1,4 Bindungen erhaltene Wert beträgt nicht weniger als 8 Gew.-%;

dadurch gekennzeichnet, daß sie folgenden weiteren Bedingungen genügt:

(5) die Beziehung zwischen besagtem Gehalt an gebundenem Styrol und besagtem Gehalt an 1,2-Bindungen ist $65 \leqq 1,7 \times$ Gehalt an gebundenem Styrol (Gew.-%)+Gehalt an 1,2-Bindungen (Gew.-%)$\leqq 100$;
(6) das Gewichtsmittel des Molekulargewichts $(\overline{M}_w)$ beträgt $35 \times 10^4$ bis $65 \times 10^4$;
(7) das Verhältnis des Gewichtsmittels des Molekulargewichts $(\overline{M}_w)$ zu Zahlenmittel des Molekulargewichts $(\overline{M}_n)$ beträgt nicht mehr als 2,3;
(8) die Anzahl peaks in einer Molekulargewichtsverteilungskurve beträgt nicht weniger als 2;
(9) die Beziehung zwischen besagtem Gewichtsmittel des Molekulargewichts und besagtem Gehalt an trans-1,4 Bindungen beträgt $75 \leqq \overline{M}_w \times 10^{-4}+1,3 \times$ Gehalt an trans-1,4 Bindungen (Gew.%)$\leqq 120$.

2. Kautschukmischung nach Anspruch 1, dadurch gekennzeichnet, daß der Ruß eine Jod-Adsorptionszahl von nicht weniger als 36 mg/l und eine Dibutylphtalat-Adsorptionszahl von nicht weniger als 60 ml/100 g aufweist.

3. Kautschukmischung nach Anspruch 1 oder 2, dadurch gekennzeichnet, daß der Vulkanisator mindestens eine Substanz, ausgewählt unter Schwefel, p-Chinon-dioxim, p,p'-Dibenzoylchinon-dioxim, 4,4'-Dithiodimorpholin, Poly-p-dinitrosobenzol, Ammoniumbenzoat und Alkylphenoldisulfid ist.

**Revendications**

1. Composition de caoutchouc pour une bande de roulement de pneumatique comprenant 10 à 120 parties en poids de noir de carbone et 0,5 à 5 parties en poids d'un agent vulcanisant, chacune pour 100 parties en poids d'un caoutchouc à base de copolymère styrène-butadiène seul ou d'un caoutchouc formé d'un mélange ne contenant pas moins de 30 parties en poids dudit caoutchouc à base de copolymère

**0 048 618**

styrène-butadiène et pas plus de 70 parties en poids d'un autre caoutchouc diénique, ledit caoutchouc à base de copolymère styrène-butadiène étant obtenu par copolymérisation statistique de styrène avec du 1,3-butadiène et répondant aux exigences suivantes:

(1) la teneur en styrène combiné est de 10 à 30% en poids;
(2) la teneur en liaison 1,2 du butadiène est de 42% à 70% en poids;
(3) la teneur en liaison 1,4-trans du butadiène n'est pas inférieure à 25% en poids;
(4) la valeur obtenue en soustrayant la teneur en liaison 1,4-cis du butadiène de ladite teneur en liaison 1,4-trans n'est pas inférieure à 8% en poids;

et caractérisée en ce qu'elle répond aux autres exigences suivantes:

(5) le relation entre ladite teneur en styrène combiné et ladite teneur en liaison-1,2 est telle que $65 \leq 1,7$ fois la teneur en styrène combiné (% en poids)+la teneur en liaisons-1,2 (% en poids) soit $\leq 100$;
(6) le poids moléculaire moyen en poids ($\overline{M}_w$) est de $35.10^4$ à $65.10^4$;
(7) le rapport du poids moléculaire moyen en poids ($M_w$) au poids moléculaire moyen en nombre ($\overline{M}_n$) ne dépasse pas 2,3;
(8) le nombre de pics dans une courbe de distribution des poids moléculaires n'est pas inférieure à 2; et
(9) la relation entre ledit poids moléculaire moyen en poids et ladite teneur en liaison-1,4-trans est telle que $75 \leq \overline{M}_w \times 10^{-4} + 1,3$ fois la teneur en liaisons-1,4-trans (% en poids) soit $\leq 120$.

2. Composition de caoutchouc selon la revendication 1, caractérisée en ce que le noir de carbone a une indice d'adsorption d'iode qui n'est pas inférieur à 36 mg/l et un indice d'adsorption du phthalate de dibutyle qui n'est pas inférieur à 60 ml/100 g.

3. Composition de caoutchouc selon l'une des revendications 1 ou 2, caractérisée en ce que l'agent vulcanisant est au moins une substance choisie parmi le soufre, le p-quinone dioxime, la p,p'dibenzoyl-quinone dioxime, la 4,4'-dithiodimorpholine, le poly-p-dinitrosobenzène, le benzoate d'ammonium et un disulfure d'alkylphénol.